# DEMANDE DE BREVET EUROPEEN

(11) **EP 1 238 987 A1**
(43) Date de publication de la demande: **11.09.2002**
(21) Numéro de dépôt: 02290569.9
(22) Date de dépôt: 07.03.2002
(51) Int. Cl.: C08B 37/16

(54) **Procédé de préparation d'une bêta-cyclodextrine directement compressible, et bêta-cyclodextrine directement compressible ainsi obtenue**

(30) Priorité: 08.03.2001 FR 0103156
(71) Demandeur: Roquette Frères, 62136 Lestrem (FR)
(72) Inventeur: Lis, José, 59253 La Gorgue (FR); Lefèvre, Philippe, 59660 Haverskerque (FR)
(74) Mandataire: Boulinguiez, Didier

(57) **Abrégé**

L'invention concerne un procédé de préparation de bêta-cyclodextrine de comprimabilité élevée et stable dans le temps, caractérisé en ce qu'il comprend une étape de déshydratation de bêta-cyclodextrine hydratée jusqu'à une teneur en eau inférieure à 6%, de préférence inférieure à 4% et plus préférentiellement encore inférieure ou égale à 2% en poids, suivie d'une réhydratation forcée jusqu'à une teneur en eau supérieure à 10%, de préférence supérieure à 12% et plus préférentiellement encore supérieure ou égale à 13% en poids.

Elle concerne également la bêta-cyclodextrine directement compressible obtenue grâce audit procédé.

## Description

L'invention a pour objet un procédé de préparation d'une bêta-cyclodextrine pour compression directe. Plus précisément, l'invention a pour objet un procédé de préparation d'une bêta-cyclodextrine possédant une comprimabilité élevée et stable dans le temps pour l'utiliser comme excipient-liant de compression directe. Elle vise également la bêta-cyclodextrine directement compressible ainsi obtenue.

Les cyclodextrines, macrocycles contenant six, sept ou huit motifs glucose selon qu'il s'agit d'alpha, de bêta ou de gamma-cyclodextrine, sont largement décrites dans la littérature, en particulier pour leurs propriétés solubilisatrices et stabilisatrices de divers composés. Ces propriétés, essentiellement dues à leur capacité à former un complexe en présence de composés aptes à se loger, en tout ou partie, à l'intérieur de ces macrocycles, trouvent un réel intérêt dans les industries alimentaires, pharmaceutiques et phytosanitaires.

Parmi les trois types de cyclodextrines naturelles existants, la bêta-cyclodextrine, que l'on appellera par la suite plus simplement βCD, a fait l'objet de nombreux travaux dans le domaine pharmaceutique, travaux orientés presque exclusivement sur ses propriétés encapsulantes optimales. De nombreux articles mettent en évidence les propriétés d'excipient de la βCD, et laissent présager un intérêt certain en galénique.

Une des principales techniques galéniques est la compression directe. La production de comprimés par compression directe impose que la poudre utilisée soit compressible, c'est à dire qu'elle forme un comprimé cohésif et dur sous l'action de la pression, mais aussi qu'elle possède une granulométrie suffisante pour une utilisation sur des presses à comprimer.

En effet, une poudre de granulométrie trop faible présentera deux défauts rédhibitoires qui sont une absence d'écoulement, ou un écoulement insuffisant pour remplir les matrices à la cadence imposée par les presses à comprimer, et l'introduction des fines particules entre toutes les pièces en mouvement, avec pour conséquence des phénomènes de grippage, le ralentissement et l'arrêt de la machine, mais aussi des problèmes de pollution.

Si les α et les γ-cyclodextrines présentent la compressibilité recherchée à des granulométries compatibles avec une production sur presse à comprimer, les β-cyclodextrines de l'art antérieur présentent une compressibilité insuffisante à la granulométrie souhaitée, et une granulométrie trop faible lorsque la poudre est compressible. En effet, l'aptitude à la cohésion est alors due à la faible taille des particules. Par ailleurs, les petites particules compressibles sont souvent obtenues par séchage par atomisation et présentent le défaut, outre la faible taille de ces particules, de produire des poudres de βCD à teneur en eau réduite qui sont instables sous forme de poudre ou de comprimés, dans des conditions climatiques de stockage ordinaires.

Il est donc apparu qu'il n'existait pas de βCD apte à se comprimer directement, c'est à dire sans granulation préalable. Des recherches ont été faites pour tenter de préparer des mélanges physiques de βCD et d'actifs, pour compression directe. Ces recherches ont montré que la comprimabilité de la βCD était très variable et que les propriétés d'écoulement n'étaient pas satisfaisantes pour une utilisation à l'échelle industrielle.

Les travaux de GIORDANO et al. (Int. J. of Pharmaceutics, 62 (1990) 153-156) ont montré que la teneur en eau de la βCD jouait un rôle important. En effet, la βCD anhydre est moins comprimable que la βCD hydratée. Cependant, ces travaux ont montré que des comprimés préparés à partir de βCD anhydre réhydratée étaient instables dans le temps. En effet, on observait une perte de comprimabilité de 50% au bout de 20 jours de stockage.

Il existait donc un besoin non satisfait pour une βCD présentant des propriétés fonctionnelles optimisées pour la compression directe. Forte de ce constat, la Société demanderesse a donc cherché à mettre au point un procédé de préparation de βCD directement compressible.

L'invention se rapporte donc à un procédé de préparation de βCD de comprimabilité élevée et stable dans le temps, caractérisé en ce qu'il comprend une étape de déshydratation de βCD hydratée jusqu'à une teneur en eau inférieure à 6%, de préférence inférieure à 4% et plus préférentiellement encore inférieure ou égale à 2%, suivie d'une réhydratation forcée jusqu'à une teneur en eau supérieure à 10%, de préférence supérieure à 12% et plus préférentiellement encore supérieure ou égale à 13%. La Demanderesse a en effet démontré après de longs travaux de recherche que la vitesse de réhydratation d'une βCD déshydratée combinée avec un seuil particulier de déshydratation avait une importance primordiale dans la qualité et la stabilité de la comprimabilité du produit final.

Ainsi, une comprimabilité optimale et stable dans le temps est obtenue lorsque la βCD subit une déshydratation jusqu'à une teneur en eau inférieure ou égale à 6% en poids, puis une réhydratation forcée jusqu'à une teneur en eau supérieure ou égale à 10%.

Par réhydratation forcée, on entend une réhydratation rapide, non naturelle, qui se distingue des techniques de l'art antérieur consistant en une reprise en eau lente, en enceinte climatique ou à l'air libre. La vitesse de réhydratation selon l'invention est donc supérieure à celle des techniques antérieures appliquées à la βCD.

La déshydratation est réalisée par tout moyen de séchage connu de l'homme du métier. Elle peut être effectuée par exemple sur un séchoir à lit fluidisé, sur un séchoir sous vide ou encore aux micro-ondes.

En ce qui concerne la réhydratation, celle-ci peut être effectuée sur tout type d'appareillage permettant une réhydratation rapide, par exemple en granulateur à lit d'air fluidisé ou en mélangeur-granulateur continu.

Les températures de conduite de la déshydratation dépendent de l'appareillage utilisé. De préférence, on utilisera un sécheur-granulateur à lit d'air fluidisé, avec un air préalablement déshydraté sur batterie froide à 4°C puis chauffé à la température maximale possible, soit environ 120°C. Cette étape est conduite jusqu'à l'obtention de la teneur en eau recherchée.

La réhydratation est de préférence effectuée sur le même appareillage après refroidissement. Le sécheur-granulateur est refroidi avec de l'air injecté à une température de 20°C. Lorsque la température du produit est inférieure à 60°C, de l'eau est ensuite pulvérisée par exemple à un débit de 800 ml/minute, et à raison de 13 litres par 100 kg de charge initiale de poudre. Cette étape est conduite jusqu'à l'obtention de la teneur en eau recherchée. La température à laquelle cette réhydratation est menée est de préférence inférieure à 40°C. En effet, au-delà de cette température, on observe un début de granulation qui nécessite un tamisage supplémentaire de façon à enlever les granulats formés.

Selon une variante du procédé conforme à l'invention, la βCD est tamisée, le plus généralement de manière à obtenir une coupe granulométrique comprise entre 100 et 200 micromètres. Ce tamisage peut être effectué avant ou après chaque étape du procédé. De préférence, il est effectué juste avant l'étape de réhydratation.

Le procédé conforme à l'invention permet ainsi d'obtenir une bêta cyclodextrine directement compressible présentant une comprimabilité améliorée tout en étant parfaitement stable au stockage.

Cette βCD est caractérisée par une comprimabilité supérieure à 70 N exprimée dans un test C. Ce test C consiste à mesurer la force, exprimée en Newton (N), qui est représentative de la comprimabilité de la poudre étudiée. Cette force traduit la résistance à l'écrasement d'un comprimé qui est cylindrique et plat, d'un diamètre de 13 mm, d'une épaisseur de 5 mm, et d'une masse volumique apparente de 1,2 g/ml. Il est particulièrement surprenant qu'une βCD préparée selon un procédé conforme à l'invention puisse présenter conjointement cette comprimabilité nettement améliorée par rapport aux produits de l'art antérieur, et être parfaitement stable dans le temps.

La βCD obtenue selon le procédé conforme à l'invention est d'autre part caractérisée en ce qu'elle présente une surface spécifique, sur la fraction comprise entre 100 et 160 micromètres, supérieure ou égale à 1,0 m²/g, un diamètre moyen de particules supérieur à 80 micromètres et une masse volumique apparente sur la fraction comprise entre 100 et 315 micromètres supérieure ou égale à 0,45 g/ml, de préférence supérieure ou égale à 0,50 g/ml.

La surface spécifique est déterminée grâce à un analyseur de surface spécifique Quantachrome, basé sur un test d'absorption de l'azote sur la surface du produit soumis à l'analyse, en suivant la technique décrite dans l'article BET Surface Area by Nitrogen Absorption de S. BRUNAUER et al. (Journal of American Chemical Society, 60,309,1938).

La βCD obtenue selon l'invention présente en outre une stabilité supérieure ou égale à six mois à température ambiante.

On entend par stabilité une variation de la comprimabilité selon le test C inférieure à 40%.

L'invention sera mieux comprise à la lecture des exemples qui suivent, qui se veulent illustratifs et non limitatifs.

### Exemple 1 : influence des taux de déshydratation/réhydratation.

On prépare de la βCD directement compressible par déshydratation en étuve climatique et réhydratation au moyen d'un séchoir-granulateur en lit d'air fluidisé STREA-1 commercialisé par la société AEROMATIC.

On étudie différents taux de déshydratation/réhydratation et leur influence sur les propriétés en compression des échantillons obtenus. Le taux d'humidité est contrôlé après chaque manipulation par mesure sur dessiccateur METTLER LP 16. L'humidité est affichée directement en pourcentage par rapport au poids de matériaux de départ non séché.

La comprimabilité des poudres obtenues ainsi que de la βCD de départ est déterminée suivant le test C suivant :

On prépare des comprimés à partir des poudres à tester auxquelles on ajoute au préalable 1% en poids de stéarate de magnésium en tant que lubrifiant.

La compression est effectuée sur presse alternative FROGERAIS de type AM, équipée de poinçons plats de diamètre 13 mm. On règle sur la presse l'enfoncement du poinçon supérieur et le volume de remplissage de la matrice, de façon à obtenir des comprimés de densité 1,2 pour une épaisseur de 5 mm, et on détermine la dureté correspondante exprimée en Newtons en utilisant un duromètre SCHLEUNIGER-2E.

La variation de la granulométrie peut influer sur le test de comprimabilité, il est donc important d'exprimer ce test pour une coupe précise. En effet, l'écoulement est amélioré par l'augmentation de la taille granulométrique.

La coupe granulométrique des échantillons testés est donc définie comme suit :

| **taille en micromètres (µm)** | **200 à 160** | **160 à 125** | **125 à 80** | **80 à 50** |
|---|---|---|---|---|
| % | 30 | 30 | 20 | 20 |

Le tableau ci-dessous reprend les différents essais réalisés, faisant varier les taux de déshydratation/réhydratation.

| Essai N° | Déshydratation (% eau) | Réhydratation (% eau) | Dureté Schleuniger (TEST C) (N) |
|---|---|---|---|
| 1 | 1.2 | 13.07 | 134 |
| 2 | 2.19 | 14.05 | 156 |
| 3 | 2.42 | 10.94 | 94 |
| 4 | 4.74 | 13.1 | 100 |
| 5 | 4.75 | 13.06 | 115 |
| 6 | 4.8 | 13.12 | 122 |
| 7 | 4.82 | 10.17 | 98 |
| 8 | 4.96 | 14.85 | 111 |
| 9 | 5.04 | 13.01 | 110 |
| 10 | 5.1 | 12.82 | 121 |
| 11 | 7.19 | 13.9 | 100 |
| 12 | 7.29 | 11.3 | 70 |
| 13 | 8.08 | 12.76 | 78 |
| βCD initiale | - | - | 25 |

Ces résultats démontrent que de très bons résultats sont obtenus pour une déshydratation inférieure à 6% et une réhydratation supérieure à 10%. La meilleure comprimabilité est obtenue lors d'une déshydratation inférieure ou égale à 2% et d'une réhydratation supérieure ou égale à 13%. Ces résultats démontrent en outre que ces deux critères doivent être remplis simultanément pour obtenir une bonne comprimabilité.

La βCD obtenue selon le procédé conforme à l'invention présente sans conteste une comprimabilité nettement supérieure à la βCD native.

### Exemple 2 : mise en oeuvre d'un procédé selon l'invention sur séchoir-granulateur à lit d'air fluidisé

La faisabilité de βCD selon l'invention est étudiée sur sécheur-granulateur à lit d'air fluidisé et testée sur un matériel de type GPCG 15 - GLATT (BINZEN).

La quantité de βCD mise en oeuvre est de 20 kg par essai.

La déshydratation est effectuée à une température de 120°C, et un air préalablement déshydraté sur batterie froide à 0°C. La teneur en eau finale est inférieure à 2%. Différentes durées de chauffage sont étudiées.

La réhydratation est effectuée par pulvérisation d'eau, à différents débits et températures. La teneur en eau finale est supérieure ou égale à 13%.

Les différents échantillons sont testés selon le test C conforme à l'invention. Les résultats sont repris dans le tableau suivant :

| | Essai 1 | Essai 2 | Essai 3 | Essai 4 | Essai 5 |
|---|---|---|---|---|---|
| **Séchage** | | | | | |
| Température de l'air entrant | 120°C | 100°C | 120°C | 120°C | 120°C |
| Débit d'air (m3 / h) | 550 | 550 | 400 | 550 | 550 |

| **Cinétique de séchage** **(% H2O)** | | | | | |
|---|---|---|---|---|---|
| - 4 min | 10.9 | 13.0 | 12.4 | 13.0 | 12.3 |
| - 8 min | 9.9 | 11.4 | 10.7 | 11.9 | 11.2 |
| - 12 min | 7.4 | 11.0 | 9.3 | 10.3 | 9.8 |
| - 20 min | 2.0 | 6.8 | 5.2 | 6.3 | 1.5 |
| - 30 min | 1.6 | 2.7 | 1.4 | 1.6 | -- |
| **Teneur en eau en fin de séchage** | 1.6 | 1.1 | 1.3 | 1.4 | 1.5 |

| **Réhydratation** | | | | | |
|---|---|---|---|---|---|
| Refroidissement de l'appareil | Oui (10min) | Oui (22min) | Oui (9min) | Non | Non |
| Débit d'eau (g/min) | 270 | 360 | 360 | 360 | 550 |
| Durée de pulvérisation | 13 min | 8.5 min | 10.0 min | 10.5 min | 7.0 min |
| | | | | | |
| Température de l'air (entrée) | 40°c | 30°C | 48°C | 55°C | 55°C |
| **Teneur en eau en fin de réhydratation** | 13.5% | 13.7% | 13.4% | 12.4% | 13.7% |
| **Durée totale du traitement** | 53 min | 86 min | 55 min | 43 min | 31 min |
| **Granulométrie (diamètre moyen en µm)** | 122 | 101 | 124 | 93* | 85* |
| **Test C (N)** | 90 | 136 | 76 | 129 | 163 |

Tous les échantillons réalisés présentent la comprimabilité recherchée. Le refroidissement de la poudre avant réhydratation s'avère facultatif. La quantité d'eau à pulvériser est dépendante de la température de l'air et du débit de pulvérisation.

Les variations au test C sont dues aux différences de granulométrie des poudres.
* les essais 4 et 5 ont mis en oeuvre une réhydratation du produit à 55°C. A cette température, on a observé un début de granulation qui a nécessité un tamisage afin d'enlever les agglomérats formés. Ceci explique la granulométrie obtenue pour ces deux essais, légèrement inférieure aux autres essais.

### Exemple 3 : étude de stabilité

On prépare de la βCD selon l'essai 2 de l'exemple 1.

Trois échantillons sont préparés : βCD initiale, βCD déshydratée et βCD réhydratée. Ces trois échantillons sont stockés dans des emballages plastiques à 20°C, 55% d'humidité relative pendant plus de six mois.

Les teneurs en eau avant et après stockage sont mesurées, ainsi que la comprimabilité selon le test C.

Les résultats sont donnés par le tableau suivant :

| | **βCD initiale** | **βCD déshydratée** | **βCD réhydratée selon l'invention** |
|---|---|---|---|
| Teneur en eau initiale | 11,4% | 0,9% | 13,3% |
| Teneur en eau après stockage | 13,7% | 8% | 12,9% |
| Test C avant stockage | 25N | < 10N | 156N |
| Test C après stockage | < 10N | < 10N | 151N |

On constate que la reprise en eau de la βCD obtenue selon un procédé conforme à l'invention est très faible. De plus la comprimabilité est pratiquement identique après six mois de stockage (on observe une diminution de la dureté de 3%), ce qui reflète une excellente stabilité.

### Exemple 4 : comprimabilité en présence d'un actif

Des comprimés sont réalisés avec un taux croissant de vitamine C cristallisée, sur presse alternative FETTE Exacta 21.

Les comprimés sont de forme plane, et ont un diamètre de 10mm pour une épaisseur de 4 mm.

On mesure la dureté maximale de chaque comprimé sur duromètre ERWEKA de type TBH 30 GMD. Les résultats sont donnés par le tableau suivant :

| | | | | | |
|---|---|---|---|---|---|
| Teneur en vitamine C (%) | 0 | 5 | 10 | 25 | 50 |
| Dureté maximale des comprimés (N) | 195 | 195 | 195 | 135 | 65 |

On obtient des duretés élevées jusqu'à des teneurs de 50% de vitamine C, bien que celle-ci soit réputée non comprimable seule.

Ceci illustre le pouvoir de liant de compression particulièrement satisfaisant de la βCD obtenue selon un procédé conforme à l'invention.

### Exemple 5 : comparaison aux produits de l'art antérieur.

On effectue un test C selon l'invention sur différentes βCD de l'art antérieur :
- RINGDEX B et BR (MERCIAN)
- CELDEX P (NIHON SHOKUHIN KAKO)

Puis les comprimés sont stockés à température ambiante et 54% d'humidité relative pendant deux jours et leur dureté est mesurée selon le test C après deux jours. Les résultats sont donnés par le tableau suivant :

| | TENEUR EN EAU (%) | Diamètre moyen des particules (µm) | TEST C (N) | Dureté selon le TEST C après 2 jours à 20°C et 54%HR |
|---|---|---|---|---|
| **1:RINGDEX B** | 3,8 | 60 | 154 | 94 |
| **2:RINGDEX BR** | 3,4 | 125 | 58 | 0 |
| **3:CELDEX P** | 5,4 | 53 | 185 | 80 |
| **βCD selon l'invention** | 13,7 | 100 | 140 | 128 |

Les produits 1 et 3 présentent un test C élevé, mais en parallèle ils présentent une granulométrie faible et une teneur en eau faible. Dans des conditions ordinaires de stockage, la reprise en eau des comprimés fait chuter très rapidement leur dureté.

L'augmentation de la granulométrie de ces produits (exemple du produit 2) fait chuter leur comprimabilité.

## Revendications

1. Procédé de préparation de bêta-cyclodextrine de comprimabilité élevée et stable dans le temps, **caractérisé en ce qu'**il comprend une étape de déshydratation de bêta-cyclodextrine hydratée jusqu'à une teneur en eau inférieure à 6%, de préférence inférieure à 4% et plus préférentiellement encore inférieure ou égale à 2% en poids, suivie d'une réhydratation forcée jusqu'à une teneur en eau supérieure à 10%, de préférence supérieure à 12% et plus préférentiellement encore supérieure ou égale à 13% en poids.

2. Procédé selon la revendication 1, **caractérisé en ce que** la déshydratation est effectuée sur séchoir-granulateur à lit d'air fluidisé.

3. Procédé selon l'une ou l'autre des revendications 1 et 2, **caractérisé en ce que** la réhydratation est effectuée sur granulateur à lit d'air fluidisé.

4. Procédé selon l'une quelconque des revendications 1 à 3, **caractérisé en ce que** la réhydratation est effectuée par pulvérisation d'eau à une température inférieure à 60°C, et de préférence inférieure à 40°C.

5. Bêta-cyclodextrine **caractérisée par** une comprimabilité supérieure à 70 N exprimée dans un test C.

6. Bêta-cyclodextrine selon la revendication 5, **caractérisée en ce qu'**elle présente une surface spécifique selon la méthode BET supérieure ou égale à 1 m²/g pour une fraction granulométrique comprise entre 100 et 160 micromètres.

7. Bêta-cyclodextrine selon l'une quelconque des revendications 5 à 6, **caractérisée en ce qu'**elle présente un diamètre moyen de particules supérieur à 80 micromètres.

8. Bêta-cyclodextrine selon l'une quelconque des revendications 5 à 7, **caractérisée en ce qu'**elle présente une masse volumique apparente supérieure ou égale à 0,45 g/ml, et de préférence supérieure ou égale à 0,50 g/ml, pour une fraction granulométrique comprise entre 100 et 315 micromètres.

9. Bêta-cyclodextrine selon l'une quelconque des revendications 5 à 8, **caractérisée en ce qu'**elle présente une stabilité supérieure à six mois à température ambiante.
